# EUROPÄISCHE PATENTANMELDUNG

(11) **EP 2 101 143 A1**
(43) Veröffentlichungstag der Anmeldung: **16.09.2009**
(21) Anmeldenummer: 08004399.5
(22) Anmeldetag: 10.03.2008
(51) Int. Cl.: G01B 11/24

(54) **Verfahren und Vorrichtung zur Erfassung der Form transparenter refraktiver Objekte**

(71) Anmelder: Technische Universität Carolo-Wilhelmina zu Braunschweig, 38106 Braunschweig (DE)
(72) Erfinder: Die Erfindernennung liegt noch nicht vor
(74) Vertreter: Einsel, Martin

(57) **Zusammenfassung**

Bei einem Verfahren zur Erfassung der Form transparenter refraktiver Objekte wird das zu vermessende Objekt (10) in Transmission In ein Abbildungssystem (20) eingefügt. Mittels des so entstandenen modifizierten Abbildungssystems wird ein Raster (30) mit einer bekannten Struktur auf eine Empfangseinrichtung (50) abgebildet und das entstehende Bild ausgewertet. Es werden flächenhafte Raster (30, 40) mit bekannten Strukturen eingesetzt, deren Rasterpunkte (32, 42) auswertbaren Ortskoordinaten in Rasterkoordinatensystemen (31, 41) zugeordnet sind. Ein oder mehrere dieser flächenhaften Raster (30, 40) werden in mindestens zwei unterschiedlichen Positionen bezüglich des zu vermessenden Objekts (10) eingesetzt. Die relative Lage der Raster (30, 40) und der Empfangseinrichtung (50) im Raum zueinander und die Abbildungseigenschaften des optischen Systems (20) sind abgesehen von dem zu vermessenden Objekt (10) bekannt. Die Empfangseinrichtung (50) weist mehrere Kameras (50a, 50b, 50c, 50d) auf. Die Kameras (50a, 50b, 50c, 50d) empfangen die von dem Abbildungssystem (20) übermittelten Strahlen in unterschiedlichen Positionen bezüglich des zu vermessenden Objektes (10).

Die in den Kameras (50a, 50b, 50c, 50d) entstehenden Bilder werden von einer Auswertungseinrichtung (70) ausgewertet. Aus einem angenommenen Abbildungsverhalten des optischen Abbildungssystems (20) einschließlich des zu vermessenden Objekts (10) wird auf errechnete Ortskoordinaten der Rasterpunkte (32, 42) in den Rasterkoordinatensystemen (32, 42) geschlossen. Aus der Abweichung der tatsächlichen Ortskoordinaten von den errechneten Ortskoordinaten wird iterativ eine Korrektur des angenommenen Abbildungsverhaltens des zu vermessenden Objekts (10). Aus dem wiederholt iterativ korrigierten Abbildungsverhalten des zu vermessenden Objekts (10) wird auf die Form von einer oder mehreren refraktiven Flächen (11, 12) des zu vermessenden Objektes (10) geschlossen.

## Beschreibung

Die Erfindung betrifft ein Verfahren zur Erfassung der Form transparenter refraktiver Objekte bei dem das zu vermessende Objekt in Transmission in ein Abbildungssystem eingefügt wird, bei dem mittels des so entstandenen modifizierten Abbildungssystems ein Raster mit einer bekannten Struktur auf einer Empfangseinrichtung abgebildet und das entstehende Bild ausgewertet wird, bei dem flächenhafte Raster mit bekannten Strukturen eingesetzt werden, deren Rasterpunkte auswertbaren Ortskoordinaten in Rasterkoordinatensystemen zugeordnet sind, bei dem ein oder mehrere dieser flächenhaften Raster in mindestens zwei unterschiedlichen Positionen bezüglich des zu vermessenden Objekts eingesetzt werden, bei dem die relative Lage der Raster und der Empfangseinrichtung im Raum zueinander und die Abbildungseigenschaften des optischen Systems abgesehen von dem zu vermessenden Objekt bekannt sind.

Die Erfindung betrifft ferner eine entsprechende Vorrichtung zur Erfassung der Form transparenter refraktiver Objekte.

Transparente refraktive Objekte sind beispielsweise Linsen. Neben symmetrischen und sphärischen Linsen gibt es auch eine Vielzahl komplizierter geformter optischer Elemente, die auch zunehmend eine praktische Bedeutung bekommen,

So finden asphärische refraktivische Optiken aufgrund ihrer im Vergleich zu sphärischen Optiken überlegenen Abbildungseigenschaften zunehmend Anwendung in der industriellen Praxis. Ein typisches und auch bekanntes Einsatzgebiet sind zum Beispiel moderne Gleitsichtgläser in Brillen. Die Hersteller derartiger Gleitsichtgläser streben eine Optimierung der Abbildungsqualität bis in die Randbereiche an und setzen hierzu ein Freiform-Design ein.

Um den Fertigungsprozess für derartige asphärische refraktive Optiken überwachen und steuern zu können, sind neben den Angaben zu den optischen Eigenschaften auch geometrische Oberflächen informationen erforderlich. Die Hersteller der Gleitsichtgläser stehen dabei zunehmend vor dem Problem, dass die bekannten und genormten Prüfverfahren für diese Daten kaum oder nicht geeignet sind, da diese Prüfungsverfahren nur eine Prüfung der optischen Wirkungen in einzelnen Bezugspunkten ermöglichen. Speziell die Fertigung eines kundenspezifischen Flächendesigns, wie es beispielsweise bei individuellen Gleitsichtgläsern der Fall ist, macht jedoch für die Fertigung eine Prüfung auf der gesamten Oberfläche des Gleitsichtglases zwingend erforderlich.

Für die Messung und Prüfung sowohl der optischen Wirkung als auch der Oberflächengeometrie refraktiver Optiken stehen an sich eine Reihe herkömmlicher Messverfahren zur Verfügung.

So gibt es Verfahren mit einer punktweisen Abtastung der Oberfläche der asphärischen refraktiven Optiken, die zwar flexibel einsetzbar sind, jedoch besonders bei komplexen Geometrien sehr lange Messzeiten benötigen. Für eine hinreichend genaue Bestimmung der Oberfläche ist eine hohe Punktdichte erforderlich, was zu den hohen Messzeiten führt. Darüber hinaus sind diese Verfahren von der Konstanz der Umgebungsbedingungen abhängig. Dies führt dazu, dass die relativ geringe Messgeschwindigkeit auch in dieser Beziehung problematisch wird und die Messungsicherheit dieser Verfahren erhöht.

Bei taktilen Verfahren besteht zusätzlich auch noch das Risiko einer Beschädigung der sehr empfindlichen und wertvollen Oberflächen.

Interferornetrische Verfahren hingegen zeichnen sich zwar durch eine sehr hohe Genauigkeit aus, aufgrund der relativ kleinen Messbereiche können mit den interferrometrischen Verfahren jedoch nur geringe Abweichungen von einer Referenzgeometrie bestimmt werden. Eine Anpassung an die zu prüfende optisch wirksame Fläche ist zwar auch bei diesen Verfahren prinzipiell möglich, erfordert aber besonders bei Freiformflächen einen sehr hohen Aufwand. Darüber hinaus ist die Robustheit von interferometrischen Verfahren gegenüber schwankenden Umgebungseinflüssen sehr gering.

Zu bedenken ist, dass für einen sinnvollen Einsatz in der Fertigung ein Messsystem neben der benötigten Genauigkeit vor allem auch eine hohe Flexibilität, große Robustheit und eine erhebliche Geschwindigkeit bieten muss.

Deflektometrische Verfahren stellen wiederum leistungsfähige Messsysteme zur Verfügung, mit denen optische Eigenschaften über der gesamten Oberfläche einer Linse relativ schnell und robust erfasst werden können. Bei spiegelnd reflektierenden Oberflächen ist eine geometrische Erfassung auf diese Weise auch recht erfolgreich.

Eine geometrische Erfassung der Grenzflächen refraktiver Optiken unter Ausnutzung des deflektometrischen Prinzips stößt jedoch auf erhebliche Schwierigkeiten, wenn die gesamte Oberfläche einer Linse mit beiden brechenden Flächen bestimmt werden soll, also mit einer Vorderseite und einer Rückseite, die beide durch einen Strahl durchlaufen werden sollen.

Eine separate Messung der Vorderfläche und der Rückfläche jeweils als spiegelnd reflektierende Oberfläche ist aufgrund des erheblichen apparativen erforderlichen Aufbaus unpraktikabel.

Für eine dreidimensionale Formerfassung diffus streuender Oberflächen werden auch bei komplexen Flächengeometrien in der Messtechnik geometrisch optische Verfahren eingesetzt, die eine derartige Oberfläche relativ schnell, rückwirkungsfrei und mit hoher Genauigkeit vermessen können. Diese bekannten Messverfahren sind jedoch nicht auf transparente Objekte wie beispielsweise Linsen anwendbar, da sie eine beobachtbare, also nicht transparente Oberfläche voraussetzen. Eine Linse kann optisch nicht direkt registriert werden, sie ist nur aufgrund ihrer optischen Wirkung nachweisbar.

Bei spiegelnd reflektierenden Oberflächen, die an sich ebenfalls nicht unmittelbar beobachtbar sind, gibt es bereits praktikable Lösungen.

Aus der DE 101 27 304 C5 sind ein Verfahren und eine Vorrichtung zur Bestimmung der dreidimensionalen Kontur einer spiegelnden Oberfläche eines Objektes bekannt, die mit einer Rasterreflektions-Photogrammetrie arbeiten. Diese bekannte und sehr erfolgreiche Konzeption zeichnet sich durch einen relativ einfachen apparativen Aufbau und einen hohen Informationsgehalt der Messung aus. Durch die Beobachtung von zwei Rasterstrukturen sind sowohl der einfallende als auch der ausfallende Lichtstrahl eindeutig in ihrer absoluten räumlichen Lage bestimmbar.

Bei einer Messung der Oberfläche einer refraktiven Optik in Reflexion ist es auf diese Weise möglich, die Oberflächenkontur aus der optischen Wirkung zu rekonstruieren. Allerdings geht dabei der geometrische Zusammenhang zwischen der Vorderfläche und der Rückfläche der refraktiven Optik verloren.

Zumindest die Abbildungseigenschaften eines transparenten Objekts dieses Typs können mit Vorschlägen aus der DE 103 28 145 A1 angegeben werden. Auch dort werden flächenhafte Raster in mindestens zwei unterschiedlichen Positionen bezüglich des zu vermessenden Objekts eingesetzt, wobei die relative Lage des Rasters und des Empfängers im Raum zueinander und die Abbildungseigenschaften des optischen Systems bekannt sind.

Bei der Ermittlung der Form von spiegelnden Oberflächen gibt es weitere Vorschläge wie etwa aus der DE 102 60 232 A1, die mit einer Bestrahlungsstärkevertellung eines Lichtstrahls in Reflexion arbeiten oder auch Gedanken etwa aus der DE 199 09 534 A1, die Qualität strukturierter Oberflächen von spiegelnden Objekten in Reflexion feststellen. Auch die JP 04-031748 A1 schlägt ein Verfahren vor, um mit einer Art Reflexion Defekte in plattenförmigen Körpern festzustellen.

Für die Erfassung der Form transparenter, refraktiver Objekte sind diese Vorschläge wie erörtert durchweg nicht oder wenig geeignet.

Aufgabe der Erfindung ist es daher, ein Verfahren und eine Vorrichtung vorzuschlagen, mit der in praktikabler Art und Weise Angaben zu der Form von transparenten refraktiven Objekten gegeben werden können.

Diese Aufgabe wird bei einem gattungsgemäßen Verfahren erfindungsgemäß dadurch gelöst, dass die Empfangseinrichtung mehrere Kameras aufweist, dass die Kameras die von dem Abbildungssystem übermittelten Strahlen in unterschiedlichen Positionen bezüglich des zu vermessenden Objektes empfangen, dass die in den Kameras entstehenden Bilder von einer Auswertungseinrichtung ausgewertet werden, dass aus einem angenommenen Abbildungsverhalten des optischen Abbildungssystems einschließlich des zu vermessenden Objekts auf errechnete Ortskoordinaten der Rasterpunkte in den Rasterkoordinatensystemen geschlossen wird, dass aus der Abweichung der tatsächlichen Ortskoordinaten von den errechneten Ortskoordinaten iterativ eine Korrektur des angenommenen Abbildungsverhaltens des zu vermessenden Objekts erfolgt, und dass aus dem wiederholt iterativ korrigierten Abbildungsverhalten des zu vermessenden Objekts auf die Form von einer oder mehreren refraktiven Flächen des zu vermessenden Objektes geschlossen wird.

Bei einer gattungsgemäßen Vorrichtung wird diese Aufgabe erfindungsgemäß dadurch gelöst, dass die Empfangseinrichtung mehrere Kameras aufweist, dass die Kameras die von dem Abbildungssystem übermittelten Strahlen in unterschiedlichen Positionen bezüglich des zu vermessenden Objektes empfangen, dass eine Auswerteeinrichtung vorgesehen ist, die die in den Kameras (entstehenden Bilder auswertet, dass die Auswertungseinrichtung so ausgebildet ist, dass aus einem angenommenen Abbildungsverhalten des optischen Abbildungssystems einschließlich des zu vermessenden Objekts auf errechnete Ortskoordinaten der Rasterpunkte in den Rasterkoordinatensystemen schließt, dass aus der Abweichung der tatsächlichen Ortskoordinaten von den errechneten Ortskoordinaten iterativ eine Korrektur des angenommenen Abbildungsverhaltens des zu vermessenden Objekts erfolgt, und dass aus dem wiederholt iterativ korrigierten Abbildungsverhalten des zu vermessenden Objekts auf die Form von einer oder mehreren refraktiven Flächen des zu vermessenden Objektes geschlossen wird.

Mit der Erfindung entsteht auf diese Weise ein neuer Auswerteansatz, der mit deflektometrischen Aspekten arbeitet. Gleichwohl ermöglicht es die Erfindung, durch Messung in Transmission sowohl die Vorderfläche als auch die Rückfläche eines refraktiven Prüflings simultan zu bestimmen.

Entsprechende Tests mit Simulationen und Messungen haben bereits ein hervorragendes Arbeiten des erfindungsgemäßen Verfahrens und der erfindungsgemäßen Vorrichtung gezeigt.

Das erfindungsgemäß zugrunde liegende Messverfahren für die dreidimensionale Formerfassung von transparenten refraktiven Objekten, letztlich also insbesondere von refraktiven Optiken, ist die Rasterphotogrammetrie. Nach herkömmlicher Anschauung verhinderte die Mehrdeutigkeit des Strahlenverlaufs in Linsen und vergleichbaren refraktiven Optiken jede dreidimensionale Formerfassung. Bei einer Transmission müssen stets beide Oberflächen einer refraktiven Optik berücksichtigt werden.

Erfindungsgemäß wird nun eine simultane Aufzeichnung des Prüflings aus verschiedenen Beobachtungsrichtungen vorgenommen. Hierzu wird anstelle eines Bildaufnehmers oder einer Kamera die Empfangseinrichtung von mehreren Kameras gebildet. In Versuchen haben sich hierzu insgesamt vier gleichzeitig eingesetzte Kameras bewährt.

Das erfindungsgemäße Messprinzip kombiniert Gedanken aus verschiedenen Bereichen, nämlich aus der Deflektometrie, den Projektionsverfahren und der Photogrammetrie.

Im Folgenden wird die Erfindung anhand der Zeichnungen näher erläutert. Es zeigen:
- **Figur 1**: eine schematische Darstellung der Problemstellung bei Messungen in Transmission;
- **Figur 2**: eine schematische Darstellung des Prinzips der Deflektometrie;
- **Figur 3**: eine schematische Darstellung des Prinzips der Rasterfotogrammetrie in Transmission;
- **Figur 4**: eine grundsätzliche Darstellung einer Auswertestrategie zur Bestimmung der Geometrie eines zu erfassenden Objektes;
- **Figur 5**: eine schematische Darstellung des Strahlenverlauyfs zu Beginn des erfindungsgemäßen Verfahrens;
- **Figur 6**: eine schematische Darstellung des berechneten Strahlenverlaufs am Ende des erfindungsgemäßen Verfahrens; und
- **Figur 7**: eine schematische Darstellung eines erfindungsgemäßen Aufbaus.

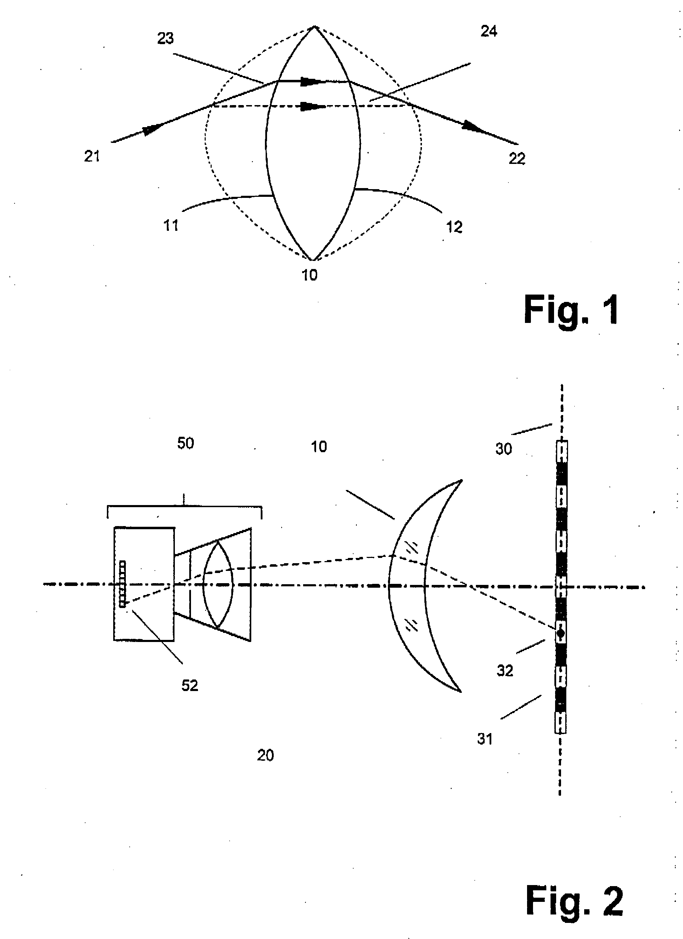

In der **Figur 1** ist dargestellt, warum es problematisch ist, die Form eines transparenten Prüflings oder einer refraktiven Optik oder eines transparenten refraktiven Objektes 10 zu bestimmen. Dargestellt ist ein Objekt 10 in Form einer Linse, deren konkrete Form unbekannt sei.

Beobachtet man nun einen einfallenden Strahl 21 und einen nach dem Hindurchtreten durch das Objekt 10 austretenden gebrochenen Strahl 22, so kann daraus noch nicht auf die Form des Prüflings 10 geschlossen werden. Der Strahl 21 ist nämlich bei der Transmission durch das Objekt 10 an zwei Flächen 11, 12 gebrochen worden, was zu Mehrdeutigkeiten bei der Konturbestimmung führt. In einem betrachteten Punkt auf der Oberfläche des Objektes 10 lässt sich die gleiche optische Wirkung durch unterschiedliche Kombinationen von Flächenelementen und Brechungsindices erreichen. Dies ist durch einen beispielhaften realen Strahlverlauf 23 angedeutet, der zu der durchgezogenen Umrisskontur des Objektes 10 passt. Aus der Beobachtung wäre jedoch auch der Strahlenverlauf 24 theoretisch möglich, der gestrichelt dargestellt ist und zu der gestrichelten Form des Objektes 10 passen würde.

Die Auflösung dieses Mehrdeutigkeitsproblems stellt eine erhebliche Herausforderung dar, wenn die Oberflächengeometrie aus der optischen Gesamtwirkung einer refraktiven Optik rekonstruiert werden soll. Wenn das verwendete Material bekannt Ist beziehungsweise der Brechungsindex auf andere Weise bestimmt werden kann, lässt sich die Mehrdeutigkeit zumindest auf die zu bestimmenden Flächenelemente reduzieren. Erfindungsgemäß wird nunmehr das Mehrdeutigkeitsproblem durch die Beobachtung einer refraktiven Optik in Transmission grundsätzlich gelöst.

In der **Figur 2** ist schematisch dargestellt, wie mit einem deflektometrischen Messverfahren auch eine nicht direkt beobachtbare Oberfläche erfasst werden kann. Man sieht hier, dass der Prüfling beziehungsweise das Objekt 10 zu einem Teil eines optischen Abbildungssystems 20 wird. Dabei wird ein flächenhaftes Raster 30 mit einer bekannten Struktur eingesetzt, das als Referenzmuster dient. Es besitzt auswertbare Ortskoordinaten in einen Rasterkoordinatensystem 31. Dieses Raster 30 mit seiner Rasterstruktur wird nun von dem Abbildungssystem 20 unter Einschluss des zu erfassenden Objektes 10 abgebildet. Diese optische Abbildung hängt nun also von den Abbildungseigenschaften auch des Objektes 10 ab. Durch eine geeignete Kalibrierung wird dies als Messeffekt ausgenutzt, wie noch im Folgenden beschrieben wird. Die eindeutige absolute Ortskodierung des Rasterkoordinatensystems 31 wird dabei genutzt.

Abgebildet wird das Raster 30 auf eine Empfangseinrichtung 50, wo sich entsprechende Bildpunkte 52 der Rasterpunkte 32 abbilden.

Das Projektionsverfahren des Rasters 30 auf den Empfänger 50 kodiert die Objektoberfläche durch eine Art strukturierter Beleuchtung. Dies ermöglicht die Ortsbestimmung innerhalb des Rasterkoordinatensystems 31 aus der beobachteten Bildinformation in einem Bildpunkt 52. Durch die Anwendung eines photogrammetrischen Verfahrens können sowohl die geometrische Konfiguration des Messsystems als auch die optischen Eigenschaften der zur Beobachtung der Struktur des Rasters 30 eingesetzten Kamera 50 mathematisch modelliert werden. Dadurch ist auch eine absolute räumliche Bestimmung in einem übergeordneten Koordinatensystem möglich.

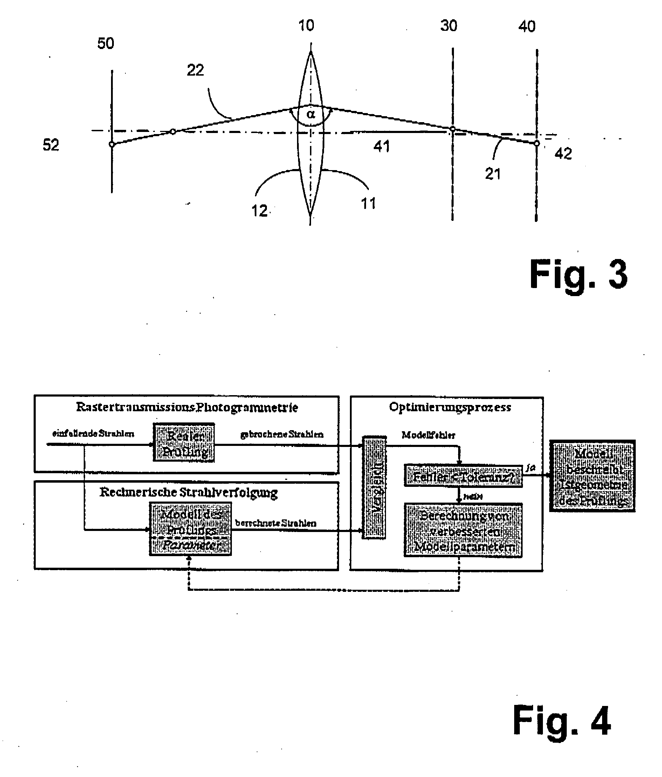

In der **Figur 3** ist nun dargestellt, wie die Verwendung eines zweiten flächenhaften Rasters 40 eine präzise und skizzierte Messung der optischen Wirkung ermöglicht. Bei dieser aktiven Triangulation sind sowohl der einfallende Strahl 21 als auch der gebrochene Strahl 22 in ihrer räumlichen Lage eindeutig bestimmbar. Dementsprechend kann die Brechkraft des Objektes 10 in einem Punkt durch den Schnittwinkel dieser beiden Strahlen 21, 22 charakterisiert werden. Dabei ist zu beachten, dass dieser Schnittpunkt im Allgemeinen keine geometrische Bedeutung besitzt. Nur für ein refraktives transparentes Objekt 10 mit vernachlässigbarer Mittendicke liegen die Schnittpunkte der beiden Strahlen 21. 22 in der Hauptebene des Objektes 10.

Wie bereits erwähnt, gibt es im Stand der Technik keine zufriedenstellenden Konzepte, die dreidimensionale Geometrie der beiden Flächen 11, 12 des transparenten, refraktiven, asphärischen Objektes 10 aus der optischen Wirkung dieses Objektes 10 zu rekonstruieren.

Die Erfindung meistert nun diese Herausforderung und findet einen Weg, die Mehrdeutigkeit aufgrund der Lichtbrechung an den beiden Oberflächen 11, 12 aufzulösen. Die Erfindung setzt die Rasterphotogrammetrie ein und beobachtet das Objekt 10 mit mehreren Kameras 50a, 50b, 50c, 50d aus verschiedenen Richtungen. Grundsätzlich denkbar wäre es auch, nur eine Kamera zu verwenden und die Beobachtung nacheinander aus verschiedenen Richtungen vorzunehmen.

Für jeden Bildpunkt 52 einer Kamera 50 wird ein einfallender Strahl 21 und ein gebrochener Strahl 22 eindeutig und absolut im Raum bestimmt.

Die **Figur 4** zeigt dabei schematisch eine allgemeine Auswertestrategie, welche die Messdaten einsetzt, die auf der Grundlage der Photogrammetrie mit den Rastern 30 und 40 arbeitet. Die Geometrie des Objektes 10 wird durch einen Optimierungsprozess iterativ bestimmt. Die Geometrie der Oberflächen 11 und 12 und die räumliche Lage des Objekts 10 werden zunächst durch ein geeignetes Systemmodell beschrieben. Es wird also eine Annahme getroffen, wie das Objekt 10 mit seinen refraktiven Flächen 11 und 12 aussieht und wo es angeordnet ist. Es wird dann die Verfolgung des Strahls mittels rechnerischen Schrittes (ray tracing) vorgenommen. Dabei wird die optische Wirkung dieses Modells des Objektes 10 auf einen einfallenden Strahl 21 bestimmt und daraus der zugehörige gebrochen Strahl 12 berechnet. Den tatsächlich gemessenen Strahlen 21, 22 stehen somit die im Modell berechneten Strahlen gegenüber. Der anschließend dann durchgeführte Vergleich charakterisiert die Abweichung des Modells von der Realität in Form eines Fehlermaßes.

Der Optimierungsprozess führt dann eine Bestimmung eines Parametersatzes für das modellierte Objekt durch, sodass der gemessene Verlauf der Strahlen 21, 22 möglichst gut durch das Modell erklärt wird. Aus dem Fehler des Modells des Objektes 10 werden dann jeweils verbesserte Modellparameter bestimmt, wobei der gesamte Ablauf solange wiederholt wird, bis der Modellfehler eine vorgegebene Toleranzschwelle unterschreitet. Durch diesen iterativen Prozess wird das Modell schrittweise an die Istgeometrie des Objektes 10 angenähert.

Zu diesem Zweck wird jeweils ein geschätzter Punkt des Objektes 10 in die Bildebene einer Kamera 50 eingeschnitten und der zugehörige Bildpunkt 52 berechnet. Ausgehend von diesem Bildpunkt wird dann der theoretische Rasterpunk 32, 42, der sich aufgrund der optischen Abbildung am geschätzten Objektpunkt ergeben müsste, dem tatsächlich beobachteten Rasterpunkt 32, 42 gegenübergestellt. Da die Strahlablenkung einer refraktiven Optik sowohl von der Vorderfläche 11 als auch von der Rückfläche 12 beeinflusst wird, kann die Berechnung eines theoretischen Rasterpunktes nur erfolgen, wenn zwei Flächenelemente berücksichtigt werden.

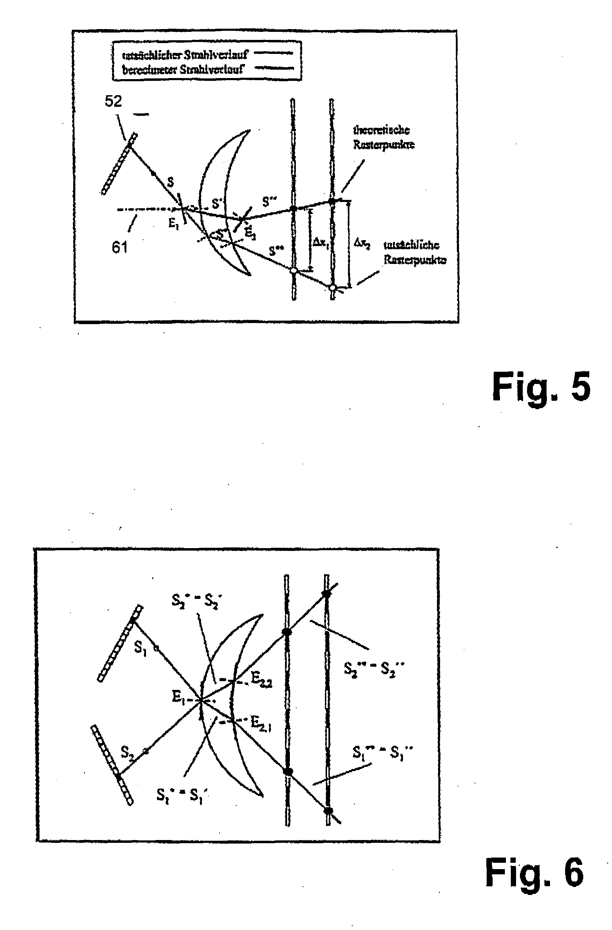

In der **Figur 5** ist die Ausgangssituation für eine einzelne Kamera 50 skizziert. Für eine eindeutige Rekonstruktion der Oberflächen 11, 12 des Objektes 10 ist es erforderlich, dass die Anzahl der Beobachtungen mindestens der Anzahl der Unbekannten entspricht. Es sei daher zunächst vorab erläutert, wie viele Parameter erforderlich sind, um den Verlauf der Strahlen 21, 22 berechnen zu können.

Anschaulich tastet in der Figur 5 eine Führungsgerade 61 die rückseitige Oberfläche 12 des Objektes 10 an. Dadurch wird mathematisch sichergestellt, dass sich ein Punkt der Oberfläche auf irgendeiner Position der Führungsgeraden 61 befindet. Auf der Führungsgeraden 61 wird zunächst eine entsprechende Objektpunktposition geschätzt, wofür die Festlegung eines Parameters wie beispielsweise der Z-Koordinate ausreicht. Anschließend kann der zugehörige Bildpunkt 52 durch einen Rückwärtsschnitt in die Bildebene der Kamera 50 bestimmt werden. Die Oberfläche 12 des Objekts 10 wird im geschätzten Objektpunkt durch eine Ebene E₁ repräsentiert, wobei die Berechnung der Strahlablenkung auch die Neigung der Ebene E₁ als Schätzwert festzulegen ist. Für die Beschreibung werden zwei Größen (Nₓ, N_{y}) benötigt, sodass die Ebene E₁ insgesamt durch drei Parameter eindeutig im Raum festgelegt ist. Das Brechwertverhältnis n/n ist dabei als bekannter Parameter in die Ausgleichung eingeführt. Grundsätzlich wäre auch eine Bestimmung oder Berechnung des Brechwertverhältnisses möglich, in der Praxis ist jedoch das Material der Linse bekannt, sodass hier zur Vereinfachung von bekannten Brechwertverhältnissen ausgegangen wird.

Würde man die Brechungsindices als Unbekannte in das System eingeben, müsste mit einem relativ schlechten Konvergenzverhalten der Gleichungssysteme bei der iterativen Berechnung gerechnet werden, was zu zusätzlichen Maßnahmen führen würde. Diese sind hier zur Vereinfachung weggelassen.

Mit den jetzt vorliegenden Daten kann nun mittels rechnerischer Strahlverfolgung aus dem Strahl S der an der Ebene E₁ gebrochene Strahl S' berechnet werden. Anschließend erfolgt auf dieser Linie S' die Schätzung von Position und Neigung einer weiteren Ebene E₂, die durch drei weitere Parameter beschrieben wird. Mit der Festlegung dieser Parameter ist die Berechnung des an E₂ gebrochenen Strahls S" möglich. Dieser Strahl S" wird anschließend mit den beiden Ebenen der Raster 30 und 40 zum Schnitt gebracht. Die resultierenden theoretischen Rasterpunkte werden mit den aufgrund des tatsächlichen Strahlverlaufs (S^{xx} → S^{x} →S) im Bildpunkt 52 beobachteten Rasterpunktes 32 verglichen und die Positionsunterschiede (Δx₁, Δy₁, Δx₂, Δy₂) können als Beobachtung in das Ausgleichungssystem eingeführt werden.

Das bedeutet, dass den vier beobachteten Werten insgesamt sechs unbekannte Parameter gegenüberstehen. Das System wäre danach noch unterbestimmt.

Für eine einzelne Kamera 50 kann daher auf diese Weise noch keine eindeutige Lösung gefunden werden. Erfindungsgemäß werden daher mehrere Kameras 50 eingesetzt. Bei der Berücksichtigung weiterer Kameras 50 ist noch zu beachten, dass sich homologe Punkte nur für die den Kameras benachbarte Fläche 12 finden lassen. Aufgrund des Rückwärtsschnittes in die Bildebene ist sichergestellt, dass im berechneten Bildpunkt 52 in jeder Kamera 50 der gleiche angenommen Objektpunkt beobachtet wird. Dies lässt sich jedoch nicht zwingend auch für die andere Fläche 11 des Objektes 10 sicherstellen. Die Kameras beobachten wie erwähnt das Objekt 10 aus verschiedenen Richtungen und der berechnete Strahl S' verläuft daher in jeweils unterschiedliche Richtungen. Dies führt dazu, dass für jede weitere Kamera 50 eine andere Fläche E₂ zu berücksichtigen ist, sodass sich neben der Anzahl der Beobachtungen auch die Anzahl der Unbekannten erhöht.

Drei Kameras 50a, 50b, 50c sind erforderlich, um eine eindeutige Lösbarkeit des Systems zu gewährleisten. Erfindungsgemäß bewährt hat sich eine Überbestimmung mit einer vierten Kamera 50d. Eine eindeutige dreidimensionale Punkterfassung ist somit grundsätzlich möglich.

In der **Figur 6** ist das Ergebnis einer Optimierung dargestellt, wobei aus Gründen der Übersichtlichkeit hier nur zwei Kameras 50 berücksichtigt sind. In einem konkreten Anwendungsfall hängt die Lösbarkeit der Ausgleichung im Wesentlichen von der numerischen Konditionierung des Gleichungssystems ab.

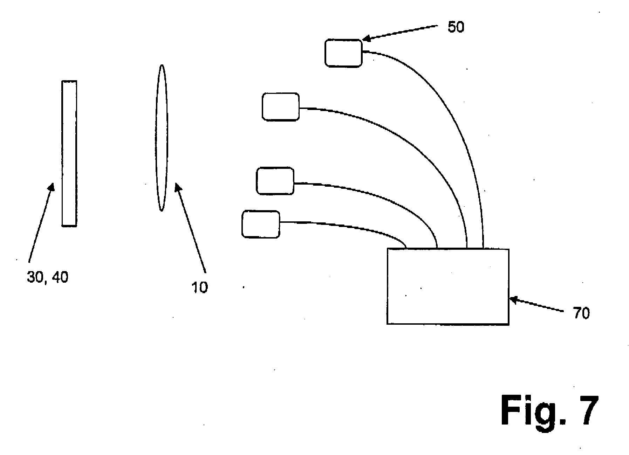

Für die Durchführung von Messungen nach dem erfindungsgemäßen Verfahren wird eine schematisch in der **Figur 7** dargestellte Vorrichtung eingesetzt. Dabei werden vier Kameras 50a, 50b, 50c, 50d in Form von CCD-Kameras eingesetzt. Die Bilddaten dieser Kameras 50 mit ihren digitalen Angaben werden in einen Auswerterechner 70 übertragen.

Bei einem versuchsweisen Aufbau der Erfindung hat sich herausgestellt, dass eine besonders präzise zentrale Kamera 50 begleitet von drei identischen weiteren Kameras sehr gute Werte liefert.

Die Strukturen der Raster 30 und 40 können beispielsweise durch einen Flachbildschirm mit guter Auflösung gebildet werden. Dabei bietet es sich an, diesen Flachbildschirm auf einer mit einem Schrittmotor betriebene Linieareinheit anzuordnen, die eine definierte Verschiebung der Struktur der Raster 30 und 40 mit einer Wiederholpräzision im Mikrometerbereich ermöglicht.

Nach der Aufzeichnung der vorderen Rasterposition mit dem Raster 30 wird der Monitor nach hinten verfahren und die Messung in der Position mit dem Raster 40 wiederholt. Im Auswerterechner 70 werden anschließend aus den Grauwertbildern einer Kamera 50 für jeden Bildpunkt 52 die absoluten Phasenwerte Φₓ und Φ_{y} des vorderen und des hinteren Rasterpunkes 32 beziehungsweise 42 berechnet. Durch die Kalibrierung der Rasterstruktur lassen sich daraus jeweils die absoluten Raumkoordinaten der beiden Rasterpunkte bestimmen. Die photogrammetrische Einmessung der Empfangseinrichtung 50 beziehungsweise des Kameraverbands wiederum ermöglicht die absolute räumliche Beschreibung der Bildpunkte und Projektionszentren. Diese Daten bilden die Ausgangsposition für die oben beschriebene Auswertestrategie zur dreidimensionalen Formerfassung refraktiver transparenter Objekten 10.

Mit der vorliegenden Erfindung entsteht ein Auswerteverfahren, welches es ermöglicht, basierend auf den Messdaten eines nach dem Prinzip der Rasterphotogrammetrie wirkenden Messsystems die dreidimensionale Geometrie der optischen Funktionsflächen eines asphärischen refraktiven Prüflings beziehungsweise Objekts zu bestimmen. Die Rasterphotogrammetrie ist ein Messverfahren, mit dem die eindeutige räumliche Bestimmung der einund austretenden Lichtstrahlen einer refraktiven Optik durch eine Kombination der Messprinzipiendefletometrie, Nahbereichsphotogrammetrie und strukturierte Beleuchtung möglich ist. Der Vorteil dieses Messverfahrens gegenüber den etablierten Verfahren besteht darin, dass eine Messung in Transmission entgegen den herkömmlichen Vorurteilen möglich ist. Damit einhergehend kann nun eine gleichzeitige Bestimmung der Oberflächengeometrie beider Flächen einer refraktiven Optik, also eines transparenten Objektes, vorgenommen werden. Besondere Maßnahmen zur Trennung der Signalanteile von Vorderfläche und Rückfläche einer Linse sind nicht erforderlich. Die geometrische Zuordnung der beiden Flächen ist automatisch Bestandteil des Messergebnisses.

Darüber hinaus bietet dieses Verfahren alle Vorteile, die sich für geometrisch optische Verfahren ergeben, unter anderem eine hohe Flexibilität und ein robuster Messaufbau, der auf fertigungsnah eingesetzt werden kann.

Auf der Grundlage der mittels Rasterphotogrammetrie gewonnenen Messdaten wird mit einer Auswertestrategie die Oberfläche einer refraktiven Optik iterativ bestimmt Die Geometrie und räumliche Lage des Prüflings beziehungsweise Objekts werden durch eine Systemmodell beschrieben, dessen Parameter im Rahmen eines Optimierungsprozesses auf der Basis eines mittels rechnerischer Strahlverfolgung bestimmten Modellfehlers schrittweise angepasste werden kann.

### Bezugszelchenllste

- 10: Objekt
- 11: Vorderfläche
- 12: Rückfläche

- 20: Abbildungssystem
- 21: Strahl
- 22: Strahl
- 23: Strahl
- 24: Strahl

- 30: Raster
- 31: Rasterkoordinatensystem
- 32: Rasterpunkte

- 40: Raster
- 41: Rasterkoordinaten
- 42: Rastersystem

- 50: Empfangseinrichtung
- 50a: Kamera
- 50b: Kamera
- 50c: Kamera
- 50d: Kamera
- 52: Bildpunkt

- 61: Führungsgerade

- 70: Auswerteeinrichtung

## Patentansprüche

1. Verfahren zur Erfassung der Form transparenter refraktiver Objekte,
**bei dem** das zu vermessende Objekt (10) in Transmission in ein Abbildungssystem (20) eingefügt wird,
**bei dem** mittels des so entstandenen modifizierten Abbildungssystems ein Raster (30) mit einer bekannten Struktur auf eine Empfangseinrichtung (50) abgebildet und das entstehende Bild ausgewertet wird,
**bei dem** flächenhafte Raster (30, 40) mit bekannten Strukturen eingesetzt werden, deren Rasterpunkte (32, 42) auswertbaren Ortskoordinaten in Rasterkoordinatensystemen (31, 41) zugeordnet sind,
**bei dem** ein oder mehrere dieser flächenhaften Raster (30, 40) in mindestens zwei unterschiedlichen Positionen bezüglich des zu vermessenden Objekts (10) eingesetzt werden,
**bei dem** die relative Lage der Raster (30, 40) und der Empfangseinrichtung (50) im Raum zueinander und die Abbildungseigenschaften des optischen Systems (20) abgesehen von dem zu vermessenden Objekt (10) bekannt sind,
**dadurch gekennzeichnet,**
**dass** die Empfangseinrichtung (50) mehrere Kameras (50a, 50b, 50c, 50d) aufweist,
**dass** die Kameras (50a, 50b, 50c, 50d) die von dem Abbildungssystem (20) übermitteiten Strahlen in unterschiedlichen Positionen bezüglich des zu vermessenden Objektes (10) empfangen,
**dass** die in den Kameras (50a, 50b, 50c, 50d) entstehenden Bilder von einer Auswertungseinrichtung (70) ausgewertet werden,
**dass** aus einem angenommenen Abbildungsverhalten des optischen Abbildungssystems (20) einschließlich des zu vermessenden Objekts (10) auf errechnete Ortskoordinaten der Rasterpunkte (32, 42) in den Rasterkoordinatensystemen (32, 42) geschlossen wird,
**dass** aus der Abweichung der tatsächlichen Ortskoordinaten von den errechneten Ortskoordinaten iterativ eine Korrektur des angenommenen Abbildungsverhaltens des zu vermessenden Objekts (10) erfolgt, und
**dass** aus dem wiederholt iterativ korrigierten Abbildungsverhalten des zu vermessenden Objekts (10) auf die Form von einer oder mehreren refraktiven Flächen (11, 12) des zu vermessenden Objektes (10) geschlossen wird.

2. Verfahren nach Anspruch 1.
**dadurch gekennzeichnet,**
**dass** auf die Form von zwei refraktiven Flächen (11, 12) des zu vermessenden Objekts (10) geschlossen wird.

3. Verfahren nach Anspruch 2,
**dadurch gekennzeichnet,**
**dass** auf die Form einer Vorderseite (11) und einer Rückseite (12) einer Linse als Objekt (10) geschlossen wird.

4. Verfahren nach einem der vorstehenden Ansprüche,
**dadurch gekennzeichnet,**
**dass** die Empfangseinrichtung (50) drei oder vier Kameras (51, 52, 53, 54) aufweist.

5. Vorrichtung zur Erfassung der Form transparenter Objekte,
**bei der** das zu vermessende Objekt (10) in Transmission in ein Abbildungssystem (20) eingefügt wird,
**bei der** mittels des so entstandenen modifizierten Abbildungssystems ein Raster (30) mit einer bekannten Struktur auf eine Empfangseinrichtung (50) abgebildet und das entstehende Bild ausgewertet wird,
**bei der** flächenhafte Raster (30, 40) mit bekannten Strukturen eingesetzt werden, deren Rasterpunkte (32, 42) auswertbaren Ortskoordinaten in Rasterkoordinatensystemen (31,41) zugeordnet sind,
**bei der** ein oder mehrere dieser flächenhaften Raster (30, 40) in mindestens zwei unterschiedlichen Positionen bezüglich des zu vermessenden Objekts (10) eingesetzt werden,
**bei der** die relative Lage der Raster (30, 40) und der Empfangseinrichtung (50) im Raum zueinander und die Abbildungseigenschaften des optischen Systems (20) abgesehen von dem zu vermessenden Objekt (10) bekannt sind,
**dadurch gekennzeichnet,**
**dass** die Empfangseinrichtung (50) mehrere Kameras (50a, 50b, 50c, 50d) aufweist,
**dass** die Kameras (50a, 50b, 50c, 50d) die von dem Abbildungssystem (20) übermittelten Strahlen in unterschiedlichen Positionen bezüglich des zu vermessenden Objektes (10) empfangen,
**dass** eine Auswerteeinrichtung (70) vorgesehen ist, die die in den Kameras (50a, 50b, 50c, 50d) entstehenden Bilder auswertet,
**dass** die Auswertungseinrichtung (70) so ausgebildet ist, dass aus einem angenommenen Abbildungsverhalten des optischen Abbildungssystems (20) einschließlich des zu vermessenden Objekts (10) auf errechnete Ortskoordinaten der Rasterpunkte (32, 42) in den Rasterkoordinatensystemen (31, 41) schließt,
**dass** aus der Abweichung der tatsächlichen Ortskoordinaten von den errechneten Ortskoordinaten iterativ eine Korrektur des angenommenen Abbildungsverhaltens des zu vermessenden Objekts (10) erfolgt, und
**dass** aus dem wiederholt iterativ korrigierten Abbildungsverhalten des zu vermessenden Objekts (10) auf die Form von einer oder mehreren refraktiven Flächen (11, 12) des zu vermessenden Objektes (10) geschlossen wird.

6. Vorrichtung nach Anspruch 5,
**dadurch gekennzeichnet,**
**dass** auf die Form von zwei refraktiven Flächen (11, 12) des zu vermessenden Objekts (10) geschlossen wird.

7. Vorrichtung nach Anspruch 6.
**dadurch gekennzeichnet,**
**dass** auf die Form einer Vorderseite (11) und einer Rückseite (12) einer Linse als Objekt (10) geschlossen wird.

8. Vorrichtung nach einem der vorstehenden Ansprüche,
**dadurch gekennzeichnet,**
**dass** die Empfangseinrichtung (50) drei oder vier Kameras (51, 52, 53, 54) aufweist.

9. Vorrichtung nach einem der Ansprüche 5 bis 8,
**dadurch gekennzeichnet,**
**dass** die Struktur der Raster (30, 40) ein periodisches Linienraster ist.

10. Vorrichtung nach Anspruch 9,
**dadurch gekennzeichnet,**
**dass** die Struktur der Raster (30, 40) jeweils zwei periodische Linienraster in zwei nicht parallelen Orientierungen aufweist, die gleichzeitig oder zeitlich versetzt aufgebaut werden.

11. Vorrichtung nach Anspruch 9 oder 10,
**dadurch gekennzeichnet,**
**dass** das oder die Linienraster aus dunklen Linien auf hellem diffus reflektierendem Grund besteht.

12. Vorrichtung nach Anspruch 9 oder 10,
**dadurch gekennzeichnet,**
**dass** das oder die Linienraster aus opaken Linien auf transparentem Grund besteht.

13. Vorrichtung nach Anspruch 9 oder 10,
**dadurch gekennzeichnet,**
**dass** das oder die Linienraster von einem selbst leuchtenden Display erzeugt wird.
